# EUROPEAN PATENT APPLICATION

(11) **EP 4 475 547 A1**
(43) Date of publication of application: **11.12.2024**
(21) Application number: 22925021.2
(22) Date of filing: 22.12.2022
(51) Int. Cl.: H04N 23/60, G01B 11/00, G01S 17/89, G06T 7/70, H04N 23/63, H04N 23/695

(54) **PROGRAM, INFORMATION PROCESSING DEVICE, AND INFORMATION PROCESSING METHOD**

(30) Priority: 03.02.2022 JP 2022015311
(71) Applicant: Sony Group Corporation, Tokyo 108-0075 (JP)
(72) Inventor: GOMITA, Jun, Tokyo 108-0075 (JP)
(74) Representative: 2SPL Patentanwälte PartG mbB
(86) International application number: PCT/JP2022/047391
(87) International publication number: WO 2023/149118

(57) **Abstract**

Comprehensive sensing in a predetermined space is more effectively and more efficiently assisted.

A program is provided for causing a computer to function as an information processing device including an output control unit that controls output of support information for assisting comprehensive sensing in a predetermined space, in which the output control unit performs output control of the support information, on the basis of a positional relationship between a feature point detected from acquired sensing information and a set reference point.

## Description

### TECHNICAL FIELD

The present disclosure relates to a program, an information processing device, and an information processing method.

### BACKGROUND ART

In recent years, a technology for performing control based on sensing information acquired in an environment has been developed. With the technology described above, in a case where the acquired sensing information, a feature point detected from the sensing information, or the like is insufficient, there is a possibility that control accuracy is lowered.

As a measure to improve a lack of the information described above, for example, Patent Document 1 discloses a technique for issuing a notification for requesting additional sensing to a user.

### CITATION LIST

### PATENT DOCUMENT

Patent Document 1: Japanese Patent Application Laid-Open No. 2014-59737

### SUMMARY OF THE INVENTION

### PROBLEMS TO BE SOLVED BY THE INVENTION

However, the technique disclosed in Patent Document 1 is limited to an additional sensing request, and it is hard to say that the technique is sufficient as a technique for assisting effective and efficient sensing.

### SOLUTIONS TO PROBLEMS

According to an aspect of the present disclosure, a program is provided for causing a computer to function as an information processing device including an output control unit that controls output of support information for assisting comprehensive sensing in a predetermined space, in which the output control unit performs output control of the support information, on the basis of a positional relationship between a feature point detected from acquired sensing information and a set reference point.

Furthermore, according to another aspect of the present disclosure, an information processing device is provided that includes an output control unit that controls output of support information for assisting comprehensive sensing in a predetermined space, in which the output control unit performs output control of the support information, on the basis of a positional relationship between a feature point detected from acquired sensing information and a set reference point.

Furthermore, according to another aspect of the present disclosure, an information processing method is provided that includes, by a processor, controlling output of support information for assisting comprehensive sensing in a predetermined space, in which controlling the output of the support information further includes performing output control of the support information, on the basis of a positional relationship between a feature point detected from acquired sensing information and a set reference point.

### BRIEF DESCRIPTION OF DRAWINGS

Fig. 1 is a block diagram illustrating a configuration example of an information processing device 10 according to an embodiment of the present disclosure.
Fig. 2 is a flowchart illustrating an example of a flow of Visual SLAM according to the embodiment.
Fig. 3 is a flowchart illustrating an example of a flow of position estimation using an advance map according to the embodiment.
Fig. 4 is a diagram for describing output control of support information according to the embodiment.
Fig. 5 is a diagram for describing designation of a reference point according to the embodiment.
Fig. 6 is a diagram for describing calculation of a coverage ratio based on a coverage region according to the embodiment.
Fig. 7 is a diagram for describing calculation of a recommended direction of sensing according to the embodiment.
Fig. 8 is a diagram for describing recalculation of the coverage region, the coverage ratio, and the recommended direction of sensing based on addition of a key frame according to the embodiment.
Fig. 9 is a diagram for describing recalculation of the coverage region, the coverage ratio, and the recommended direction of sensing based on a position change of the reference point according to the embodiment.
Fig. 10 is a diagram for describing designation of an invalid region and calculation of a coverage region, a coverage ratio, and a recommended direction of sensing based on the invalid region according to the embodiment.
Fig. 11 is a flowchart illustrating an example of a flow of the output control of the support information according to the embodiment.
Fig. 12 is a block diagram illustrating a hardware configuration example of an information processing device 90 according to the embodiment.

### MODE FOR CARRYING OUT THE INVENTION

Hereinafter, preferred embodiments of the present disclosure will be described in detail with reference to the accompanying drawings. Note that, in the present specification and drawings, components having substantially the same functional configuration are denoted by the same reference sign, and redundant description is omitted.

Note that the description will be given in the following order.
1. Embodiment
1.1. Overview
1.2. Configuration example
1.3. Flow of Visual SLAM
1.4. Flow of position estimation using advance map
1.5. Output control of support information
2. Hardware configuration Example
3. Conclusion

### <1. Embodiment>

### <<1.1. Overview>>

First, an overview of an embodiment of the present disclosure will be described. As described above, in a case where control based on sensing information acquired by a sensor is performed, the sensing information and an amount of a feature point detected from the sensing information, or the like largely effect on control accuracy.

As an example of the control based on the sensing information, for example, simultaneous localization and mapping (SLAM) for estimating a position, a posture, a motion, or the like on the basis of the sensing information is exemplified.

Furthermore, as the sensor used for the SLAM, light detection and ranging (LIDAR) and an imaging sensor are exemplified.

Although the SLAM can be performed in an unknown space (environment) with no map in principle, for example, a map created in advance for the following purposes (hereinafter, referred to as advance map) may be used.

- To reduce accumulated errors
- To return from a state where a position is not required in the middle and a pose cannot be accumulated
- To obtain a position on a predetermined coordinate system

To achieve the above purposes, it is required to perform matching between sensing information used to create the advance map and sensing information acquired at the time of performing the SLAM.

Therefore, in order to realize control with higher accuracy, it is important to comprehensively perform sensing in a predetermined space (eliminating direction, region, or the like in which sensing is not performed, in predetermined space).

However, in general, in an open space such as outdoors, it is difficult to quantify completeness related to the sensing, and in addition, it is difficult to determine whether or not a comprehensive map can be created.

Moreover, even in a case where it can be determined that the map is not comprehensive, that is, there is a lack in the map, in a case where a method for compensating the lack is unknown or unclear, it is difficult to create the comprehensive map.

The technical idea according to the embodiment of the present disclosure has been conceived focusing on the above point and more effectively and more efficiently assists comprehensive sensing in the predetermined space.

In order to realize the above, one of features of a program according to an embodiment of the present disclosure is to cause a computer to implement an output control function for controlling output of support information for assisting comprehensive sensing in a predetermined space and to cause the output control function to perform output control of the support information, on the basis of a positional relationship between a feature point detected from the acquired sensing information and a set reference point.

Hereinafter, a configuration, control, or the like of a device that realizes the above features will be described in detail.

Note that, hereinafter, as an example of the control based on the sensing information, the SLAM, in particular, Visual SLAM for performing control based on a captured image will be described as a main example.

However, a technology based on the sensing information according to the present embodiment is not limited to the SLAM. Furthermore, the sensing information according to the present embodiment is not limited to images.

The technology according to the present embodiment is widely applicable to a technology for which comprehensive sensing in a space is important.

### <<1.2. Configuration example>>

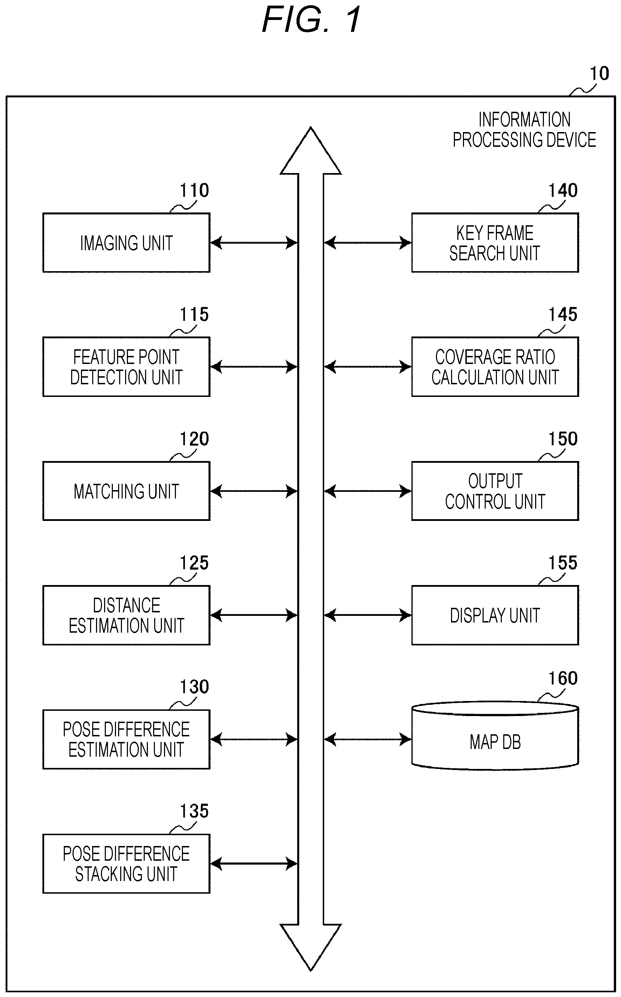

Next, a configuration example of an information processing device 10 according to the present embodiment will be described. Fig. 1 is a block diagram illustrating a configuration example of the information processing device 10 according to the present embodiment.

As illustrated in Fig. 1, the information processing device 10 according to the present embodiment may include an imaging unit 110, a feature point detection unit 115, a matching unit 120, a distance estimation unit 125, a pose difference estimation unit 130, a pose difference stacking unit 135, a key frame search unit 140, a coverage ratio calculation unit 145, an output control unit 150, a display unit 155, and a map DB 160.

Note that details of functions of each configuration described above will be separately described.

Furthermore, the configuration of the information processing device 10 illustrated in Fig. 1 is merely an example, and the configuration of the information processing device 10 according to the present embodiment is not limited to the example.

For example, the imaging unit 110 is an example of a sensor unit in a case where the sensing information is an image. Therefore, in a case where another piece of information is used as the sensing information, the information processing device 10 may include a configuration for acquiring corresponding sensing information, instead of or in addition to the imaging unit 110.

Furthermore, for example, the information processing device 10 according to the present embodiment may further include an operation unit that receives an operation by a user, a voice output unit that outputs a voice, or the like.

Moreover, each configuration illustrated in Fig. 1 is not necessarily included in a single device. For example, the information processing device 10 may include the imaging unit 110, the output control unit 150, and the display unit 155 among the configurations illustrated in Fig. 1 and perform output control to be described later by communicating with an information processing server including other configurations.

The configuration of the information processing device 10 according to the present embodiment and a configuration of a system including the information processing device 10 can be flexibly modified according to specifications, operations, or the like.

### <<1.3. Flow of Visual SLAM>>

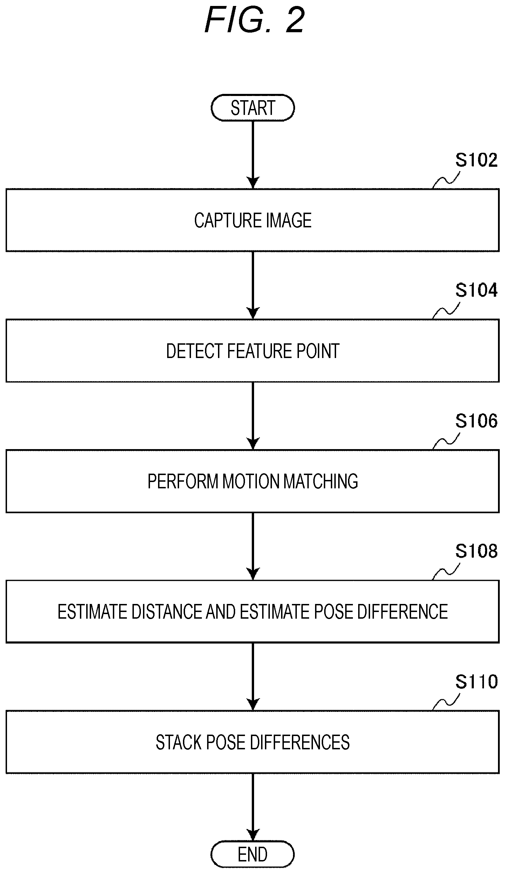

Next, a flow of Visual SLAM according to the present embodiment will be described. Fig. 2 is a flowchart illustrating an example of the flow of the Visual SLAM according to the present embodiment.

In a case of the example illustrated in Fig. 2, first, the imaging unit 110 captures an image in a predetermined space (S102).

The image captured in step S102 is an example of the sensing information according to the present embodiment.

Note that the information processing device 10 according to the present embodiment may acquire further sensing information using an inertial measurement unit (IMU), a compass, a time of flight (ToF) sensor, a global navigation satellite system (GNSS), a wireless communication device, or the like, in addition to the images.

Processing such as optical distortion correction or gain adjustment is executed on the image captured in step S102 as necessary, and the image is input into the feature point detection unit 115.

The feature point detection unit 115 detects a feature point that can be used for self-position estimation from the image captured in step S102 and describes a feature amount of the detected feature point (S104).

Here, the feature point detected from the image is typically a pattern or the like with high contrast and having no similar structure therearound. It is desirable that the feature point can be uniquely matched due to its uniqueness.

Two-dimensional coordinates and the feature amount of the image related to the feature point detected by the feature point detection unit 115 are stored in the map DB 160.

Next, motion matching is performed by the matching unit 120 (S106).

Specifically, in a case where two images (hereinafter, image most recently captured is referred to as current frame, and image captured before current frame is referred to as past frame) are obtained in time series, the matching unit 120 searches for a point corresponding to the feature point in the current frame (corresponding point) by matching, on the basis of information regarding a feature point detected from the past frame stored in the map DB 160.

In a case where the corresponding point is found here, this means the same object (point) can be seen from viewpoints (position and posture of imaging unit 110) of both of the past frame and the current frame, and it can be regarded that a difference in a position in the image is caused by changes in the position and the posture of the imaging unit 110.

Therefore, if a change in two-dimensional coordinates of a point between the two viewpoints and the changes in the position and the posture of the imaging unit 110 (hereinafter, referred to as pose difference) are known, it is possible to estimate a distance by triangulation based on movement parallax (parallax caused by movement of imaging unit 110).

Therefore, the distance estimation unit 125 according to the present embodiment obtains three-dimensional coordinates of each feature point by the distance estimation and stores the acquired three-dimensional coordinates of each feature amount in the map DB 160 (S108).

Furthermore, the pose difference estimation unit 130 according to the present embodiment estimates the pose difference between the past frame and the current frame, on the basis of the three-dimensional coordinates of each feature point in the past frame stored in the map DB 160 and two-dimensional information of the corresponding point in the current frame obtained by the matching unit 120 (S108).

When a point cloud (three-dimensional coordinates) on a three-dimensional space and a point cloud (two-dimensional coordinates) on a two-dimensional plane corresponding to the point cloud (that is, project point cloud on three-dimensional space) are given, a position and a posture corresponding to the projection plane (that is, position and posture of imaging unit 110) can be obtained by solving a minimization problem using an error on an image when each feature point is projected on the two-dimensional plane as a cost.

The pose difference obtained by the pose difference estimation unit 130 is input into the distance estimation unit 125 and is used as the changes in the position and the posture between the two viewpoints when the distance estimation based on the movement parallax is performed.

Furthermore, the pose difference stacking unit 135 stacks the pose differences obtained by the pose difference estimation unit 130 (S110).

It is possible to obtain poses accumulated from a start point by stacking the pose differences in step S110. The pose is stored in the map DB 160 and is used as a pose of a key frame.

Note that feature point information (two-dimensional coordinates, three-dimensional coordinates, and feature amount of feature point) in the past frame stored in the map DB 160 and the position and the posture of the imaging unit 110 at the time of imaging the past frame function as a reusable advance map.

Furthermore, in the present disclosure, the past frame is also referred to as the key frame, and each feature point associated with the key frame is also referred to as a landmark.

### <<1.4. Flow of position estimation using advance map>>

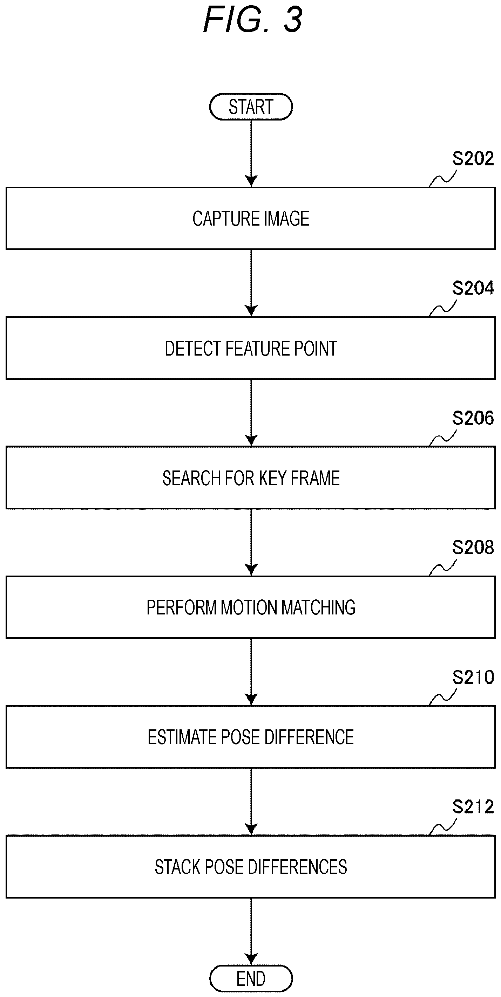

Next, a flow of position estimation using the advance map according to the present embodiment will be described. Fig. 3 is a flowchart illustrating an example of the flow of the position estimation using the advance map according to the present embodiment.

Since image capturing in step S202 and feature point detection in step S204 illustrated in Fig.3 may be respectively and substantially the same as the processing in step S102 and the processing in step S104 illustrated in Fig. 2, detailed description is omitted.

After the feature point detection in step S204, the key frame search unit 140 creates a query used to search the map DB 160 for the key frame on the basis of the two-dimensional coordinates and the feature amount of each feature point detected in step S204 and performs search (S206).

A key frame most similar to the query is selected by the search in step S206, and two-dimensional coordinates and a feature amount of each landmark in the key frame are input into the matching unit 120.

The matching unit 120 performs motion matching on the basis of the input information and obtains two-dimensional coordinates of the corresponding point in the current frame (S208).

Furthermore, the pose difference estimation unit 130 estimates the pose difference on the basis of the three-dimensional coordinates of each landmark in the key frame selected in step S206 and the two-dimensional coordinates of the corresponding point obtained in step S208 (S210).

The pose difference estimated in step S210 represents the changes in the position and the posture of the imaging unit 110 from the key frame to the current frame.

Next, the pose difference stacking unit 135 stacks the pose difference estimated in step S210 on the pose of the key frame stored in the map DB 160 (S212).

By the processing in step S212, the position and the posture of the imaging unit 110 at the time of capturing the current frame in the advance map are obtained.

As described above, information accumulated in the map DB 160 in a processing process of the Visual SLAM can be reused as the advance map in SLAM processing to be separately executed later.

Note that, in the stacking of the pose difference between the two frames, an error is also accumulated with time (as more pose differences are accumulated). On the other hand, since it is possible to acquire the changes in the position and the posture of the imaging unit 110 from the key frame by using the advance map as described above, it is possible to eliminate an effect of the accumulated errors.

Furthermore, when a frame of which a pose difference is not obtained is generated in the middle, stacking cannot be performed. In this case, it is possible to restart the stacking from the position and the posture of the imaging unit 110 at the time of capturing the key frame, by using the advance map.

In addition, for applications such as location-based VR/AR, there is a demand for arranging a CG object at a certain fixed position. In response to such a demand, in a case where the accumulated pose from the start point is used, the position changes every time if the start point is not set to be the same. On the other hand, in a case where the advance map described above is used, the position and the posture on the map can be set to be the same regardless of the start point, and an object can be displayed at the same position viewed from the user.

### <<1.5. Output control of support information>>

Next, output control of support information according to the present embodiment will be described in detail.

As described above, according to the advance map, it is possible to realize the self-position estimation or the like with higher accuracy. However, in a case where the sensing information used to generate the advance map is not comprehensively acquired, a high effect cannot be exhibited.

Therefore, one of features of the output control unit 150 according to the present embodiment is to control an output of the support information for more effectively and more efficiently assisting comprehensive sensing in a predetermined space.

Hereinafter, a case where the user captures an image used to create the advance map by using the information processing device 10 which is a mobile device such as a smartphone will be described as a main example.

Note that the advance map generated on the basis of the image captured by the information processing device 10 may be used for the processing such as the SLAM by the information processing device 10 or may be used for processing such as SLAM by another device.

For example, in a case where the imaging unit used to implement the SLAM is provided in a relatively large device such as an automobile or a robot, a case is assumed where it is difficult to handle the imaging unit to create the advance map due to its size.

Even in a case described above, by generating the advance map using the information processing device 10 as described later, it is possible to implement more accurate SLAM.

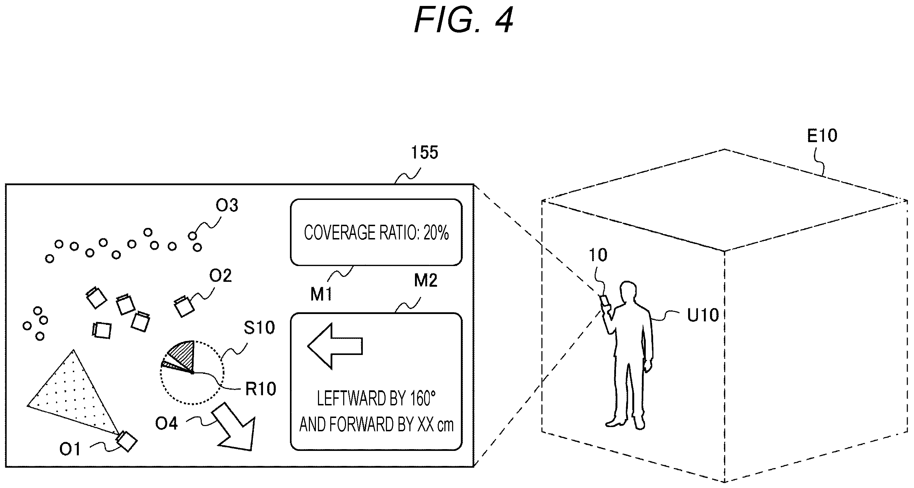

Fig. 4 is a diagram for describing the output control of the support information according to the present embodiment. In Fig. 4, an example of a situation where a user U10 captures an image using the information processing device 10 that is a mobile device in a predetermined space E10 and support information displayed on the display unit 155 of the information processing device 10 in the situation is illustrated.

The user U10 captures the image using the imaging unit 110 of the information processing device 10 while moving in the predetermined space E10, in order to generate an advance map regarding the predetermined space E10.

At this time, by each configuration included in the information processing device 10, the information regarding the key frame, the landmark, the position and the posture of the imaging unit 110, or the like is acquired as described above and is stored in the map DB 160.

At this time, as illustrated in Fig. 4, the output control unit 150 according to the present embodiment may display an object O1 indicating a current position, posture, and angle of view of the imaging unit 110, an object O2 indicating a position and a posture of the imaging unit 110 when the key frame is imaged, an object O3 indicating a position of the landmark associated with the key frame, or the like on the display unit 155 in real time.

In this way, the support information according to the present embodiment may include information regarding the position and the posture of the sensor when the acquired sensing information is acquired, the current position and posture of the sensor, the detected feature point, or the like.

In a case where the user U10 has knowledge regarding the SLAM, the user U10 can recognize a direction where the landmark is insufficient or the like and more effectively and more efficiently perform subsequent imaging, by confirming the support information described above.

On the other hand, in a case where the user U10 has poor knowledge regarding the SLAM, it is assumed that it is difficult for the user U10 to intuitively recognize a direction to be imaged, even if the information regarding the position and the posture of the imaging unit 110 when the key frame is imaged and the position of the landmark is given.

Therefore, the output control unit 150 according to the present embodiment may control the output of the support information, on the basis of a coverage ratio regarding the acquired sensing information, calculated on the basis of a positional relationship between the feature point and a reference point.

In a case of the example illustrated in Fig. 4, the output control unit 150 controls display of a message M1 indicating a value of the coverage ratio and graphical reflection of the coverage ratio on a sphere S10 centered on a reference point R10.

The user U10 can confirm a change (increase) in the coverage ratio by the above display and can improve efficiency of an imaging work by performing imaging so as to largely increase the coverage ratio.

Furthermore, the support information according to the present embodiment may include information regarding a recommended direction of sensing.

In a case of the example illustrated in Fig. 4, the output control unit 150 controls display of an object O4 indicating the recommended direction of sensing and displays of a message M2 for verbally describing the recommended direction of sensing.

According to the above display, even in a case where the user U10 has no knowledge regarding the SLAM, it is possible to create an advance map with high quality by imaging the presented recommended direction.

Hereinafter, calculation of the coverage ratio by the coverage ratio calculation unit 145 according to the present embodiment will be described in detail.

The coverage ratio calculation unit 145 according to the present embodiment calculates the coverage ratio on the basis of the positional relationship between the feature point such as the landmark and the designated reference point.

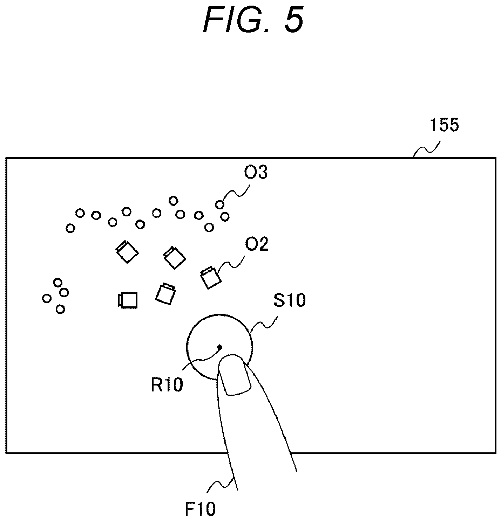

Fig. 5 is a diagram for describing the designation of the reference point according to the present embodiment. Note that, in Fig. 5, a case where the display unit 155 is included as a touch panel is illustrated.

In this case, the user U10 may be able to designate the reference point R10 at any position using a finger F10 or the like, while visually recognizing the object O2 indicating the position and the posture of the imaging unit 110 when the key frame is imaged, the object O3 indicating the position of the landmark associated with the key frame, or the like. Furthermore, the user U10 may be able to arbitrarily designate a size of the sphere S10 centered on the reference point R10.

Note that the user U10 does not necessarily need to designate the reference point R10 and the sphere S10, and the coverage ratio calculation unit 145 may automatically set the reference point R10 and the sphere S10 on the basis of a distribution of the key frames, the landmarks, or the like.

The coverage ratio calculation unit 145 calculates the coverage ratio, on the basis of an intersection between a spherical surface of the sphere S10 centered on the reference point R10 (or circumference of circle centered on reference point R10) and a straight line connecting the feature point such as the landmark and the reference point R10.

More specifically, the coverage ratio calculation unit 145 may calculate the coverage ratio by obtaining a coverage region on the spherical surface of the sphere S10 (or circumference of circle) formed by the plurality of intersections related to the plurality of feature points for each sensor position and each sensor posture when the acquired sensing information is acquired.

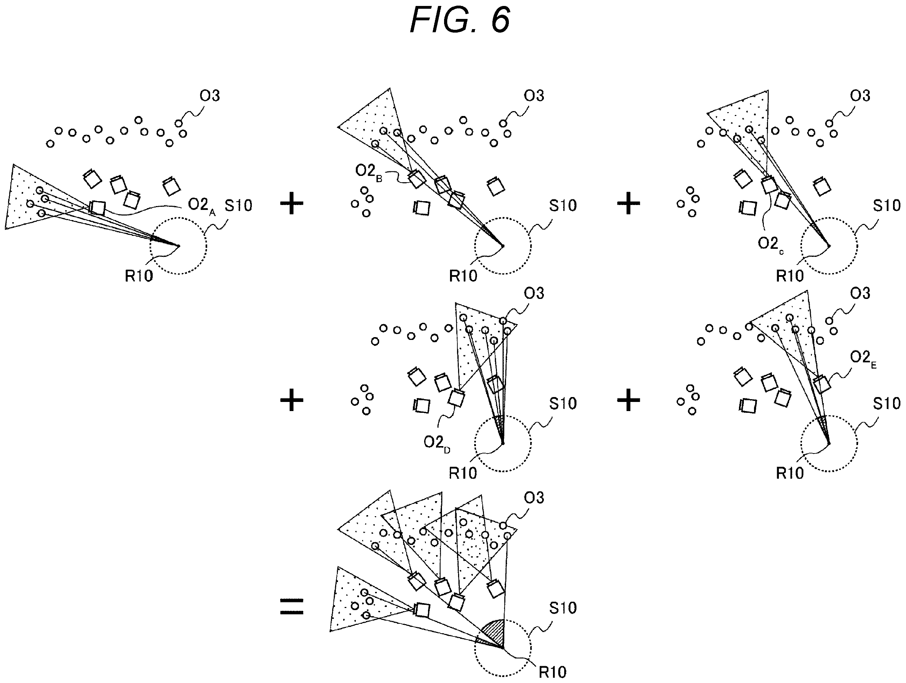

Fig. 6 is a diagram for describing calculation of the coverage ratio based on the coverage region according to the present embodiment.

In the calculation of the coverage ratio, the coverage ratio calculation unit 145 selects one key frame from among the plurality of existing key frames.

Next, the coverage ratio calculation unit 145 draws a straight line connecting each landmark included in the angle of view at the position and the posture of the imaging unit when the selected key frame is imaged and the reference point R10. At this time, on the spherical surface of the sphere S10, the plurality of intersections with the above straight line is formed.

The coverage ratio calculation unit 145 according to the present embodiment may set a region divided by the intersection existing on the most end side of the angle of view among the plurality of intersections as the coverage region (indicated by hatching).

Furthermore, the coverage ratio calculation unit 145 repeatedly executes the processing for each key frame and sets a sum of the coverage regions obtained in the respective key frames as a total coverage region in a current map.

In a case of the example illustrated in Fig. 6, the coverage ratio calculation unit 145 obtains the coverage region for each key frame imaged at the position and the posture of the imaging unit 110 indicated by each of objects O2_{A} to O2_{E} and obtains the total coverage region by the sum of the obtained coverage regions.

Note that, on the sphere S10 illustrated in Fig. 4, the total coverage region obtained as described above is graphically determined. In this way, the output control unit 150 according to the present embodiment may control the display of the support information on the basis of the coverage region.

Furthermore, the coverage ratio calculation unit 145 can calculate the coverage ratio, by obtaining a ratio of the total coverage region with respect to a surface area (circumferential length in a case of circle) of the sphere S10.

Next, calculation of the recommended direction of sensing according to the present embodiment will be described in detail.

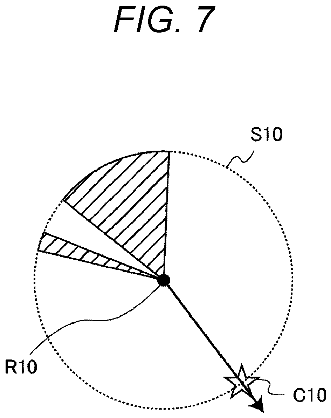

Fig. 7 is a diagram for describing the calculation of the recommended direction of sensing according to the present embodiment. In Fig. 7, an example of the coverage region (hatched) in the sphere S10 is illustrated.

The coverage ratio calculation unit 145 according to the present embodiment may calculate the recommended direction of sensing on the basis of the coverage region.

In this case, the coverage ratio calculation unit 145 obtains a non-coverage region (white background) that is a region that does not correspond to the coverage region on the spherical surface of the sphere S10. Note that, when a gravity C10 of the non-coverage region is obtained, in a case where a surface area of the non-coverage region sandwiched by the coverage regions is equal to or less than a predetermined value, the coverage ratio calculation unit 145 may obtain the gravity C10 while ignoring the non-coverage region. Furthermore, in a case where the non-coverage region is divided into a plurality of regions, the coverage ratio calculation unit 145 may target only the non-coverage region with the largest area.

Next, the coverage ratio calculation unit 145 obtains the gravity C10 of the non-coverage region on the spherical surface of the sphere S10 and calculates the recommended direction of sensing on the basis of the gravity C10.

More specifically, the coverage ratio calculation unit 145 may set a direction in which the gravity C10 of the non-coverage region exists as viewed from the reference point R10, as the recommended direction of sensing.

According to the calculation of the recommended direction of sensing as described above, it is possible to clearly specify a direction in which the landmark is insufficient and present the direction to the user U10.

Next, recalculation regarding the coverage region, the coverage ratio, the recommended direction of sensing, or the like according to the present embodiment will be described.

The coverage region, the coverage ratio, and the recommended direction of sensing according to the present embodiment change each time when the number of images (key frame) captured by the user U10 using the imaging unit 110 increases.

Therefore, the coverage ratio calculation unit 145 recalculates the coverage region, the coverage ratio, and the recommended direction of sensing each time when the key frame is added, and the output control unit 150 may perform the output control of the support information on the basis of the coverage region, the coverage ratio, and the recommended direction of sensing that are recalculated.

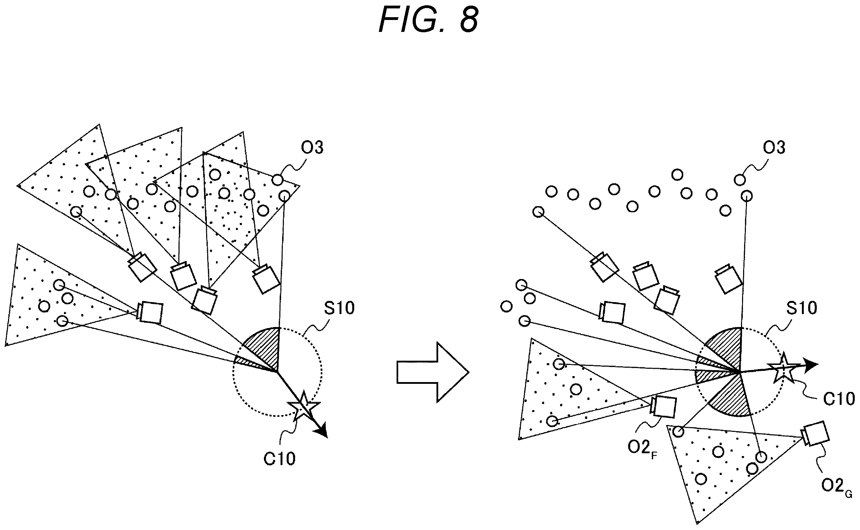

Fig. 8 is a diagram for describing the recalculation of the coverage region, the coverage ratio, and the recommended direction of sensing based on the addition of the key frame according to the present embodiment.

In Fig. 8, from a situation illustrated on the left side in Fig. 8, a situation is illustrated in which key frames captured at positions and postures of the imaging units 110 newly indicated by objects O2_{F} and O2_{G} are added, as illustrated on the right side in Fig. 8.

In this case, the coverage ratio calculation unit 145 recalculates the coverage region on the basis of a landmark or the like associated with the key frames captured at the positions and the postures of the imaging units 110 indicated by the objects O2_{F} and O2_{G}.

Furthermore, the coverage ratio calculation unit 145 recalculates the coverage ratio on the basis of the recalculated coverage region.

Furthermore, the coverage ratio calculation unit 145 obtains the gravity C10 of the non-coverage region on the basis of the recalculated coverage region and recalculates the recommended direction of sensing on the basis of the newly obtained gravity C10.

The output control unit 150 may update the support information to be displayed on the display unit 155, each time when the coverage region, the coverage ratio, and the recommended direction of sensing are recalculated.

By performing the above recalculation and updating the support information in real time, the user U10 can constantly grasp the latest information and effectively and efficiently perform the imaging work.

Furthermore, the coverage region, the coverage ratio, and the recommended direction of sensing according to the present embodiment change depending on a position change of the reference point.

Therefore, the coverage ratio calculation unit 145 recalculates the coverage region, the coverage ratio, and the recommended direction of sensing on the basis of the change in the reference point, and the output control unit 150 may perform the output control of the support information on the basis of the coverage region, the coverage ratio, and the recommended direction of sensing that are recalculated.

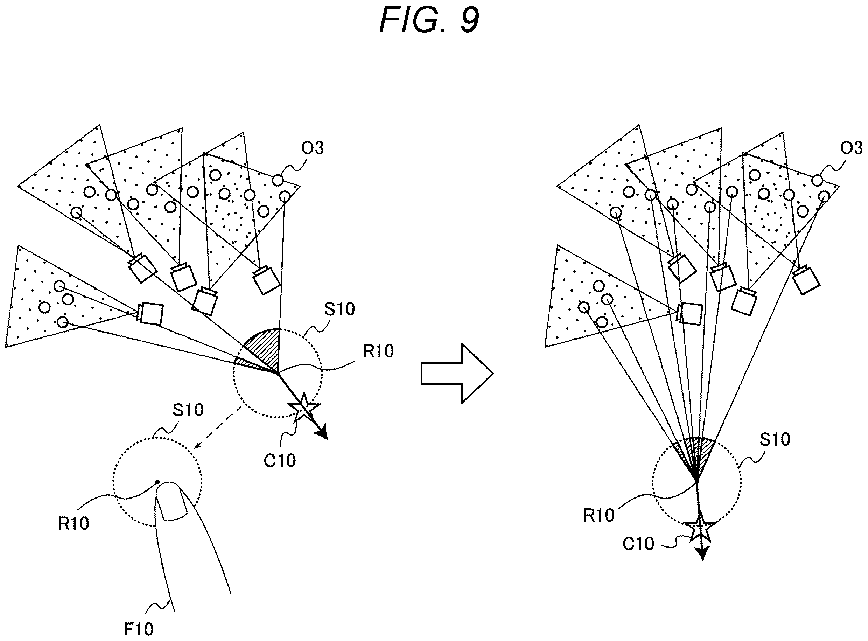

Fig. 9 is a diagram for describing the recalculation of the coverage region, the coverage ratio, and the recommended direction of sensing based on the position change of the reference point according to the present embodiment.

On the left side in Fig. 9, a situation is illustrated in which the user U10 changes the position of the reference point R10 using the finger F10 or the like. In this case, as illustrated on the right side in Fig. 9, the coverage ratio calculation unit 145 recalculates the coverage region, the coverage ratio, and the recommended direction of sensing on the basis of the reference point R10 of which the position has been changed.

Furthermore, the output control unit 150 updates the support information to be displayed on the display unit 155, on the basis of the coverage region, the coverage ratio, and the recommended direction of sensing that are recalculated.

As described above, the position of the reference point according to the present embodiment can be arbitrarily changed, and in addition, the support information is updated on the basis of the position change of the reference point.

Next, designation of an invalid region according to the present embodiment and the calculation of the coverage region, the coverage ratio, and the recommended direction of sensing based on the invalid region will be described.

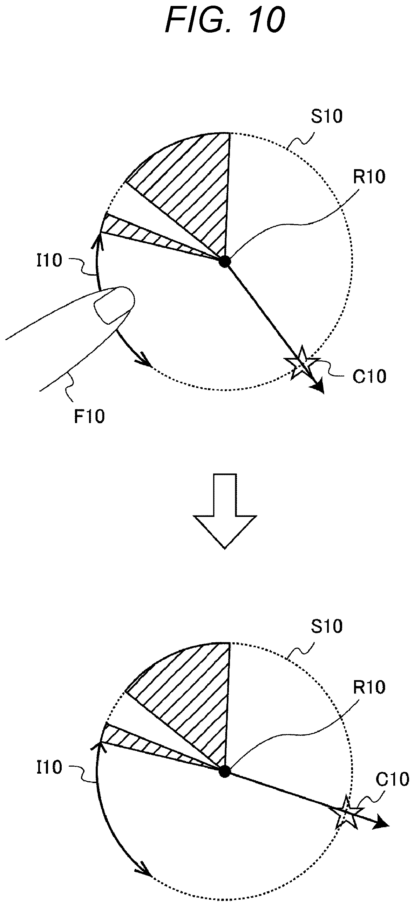

Fig. 10 is a diagram for describing the designation of the invalid region according to the present embodiment and the calculation of the coverage region, the coverage ratio, and the recommended direction of sensing based on the invalid region.

In an upper part of Fig. 10, a situation is illustrated in which the user U10 designates an invalid region 110 on the spherical surface of the sphere S10 using the finger F10 or the like.

The invalid region 110 according to the present embodiment may be a region where it is determined that it is not necessary to perform sensing, in the predetermined space E10. For example, the user U10 may be able to designate a region where a wide sky can be seen outdoors, a region where a dynamic subject is constantly imaged, or the like as the invalid region.

In a case where the invalid region I10 is designated by the user U10, the coverage ratio calculation unit 145 calculates the coverage region, the coverage ratio, and the recommended direction of sensing on the basis of the invalid region 110, as illustrated in a lower part of Fig. 10.

The coverage ratio calculation unit 145 can calculate the coverage ratio, by obtaining a ratio of the total coverage region with respect to a region obtained by excluding the invalid region I10 from the surface of the sphere S10. Furthermore, the coverage ratio calculation unit 145 calculates the gravity C10 without including the invalid region I10 in the non-coverage region.

Note that, in a case where the invalid region I10 is newly designated, updated, or deleted, the coverage ratio calculation unit 145 calculates the coverage region, the coverage ratio, and the recommended direction of sensing.

According to the above control, it is possible to assist comprehensive sensing in consideration of a region where sensing is unnecessary or a region where it is difficult to perform sensing.

Next, a flow of the output control of the support information according to the present embodiment will be described in detail.

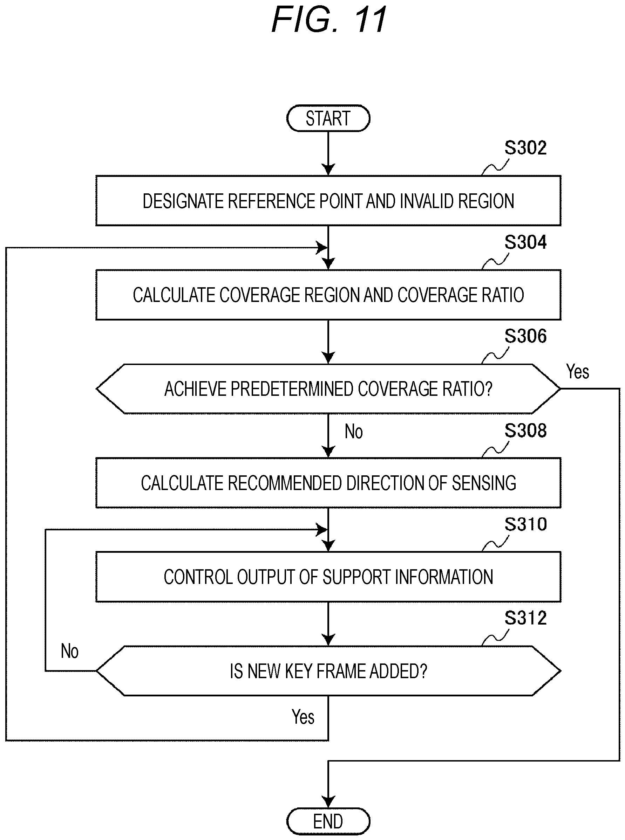

Fig. 11 is a flowchart illustrating an example of the flow of the output control of the support information according to the present embodiment.

In a case of the example illustrated in Fig. 11, first, the user designates the reference point and the invalid region (S302).

Note that the user does not necessarily need to designate the reference point and the invalid region. As described above, the reference point may be automatically set by the coverage ratio calculation unit 145.

Furthermore, the user may designate the reference point or the like after performing imaging to some extent.

Next, the coverage ratio calculation unit 145 calculates the coverage region and the coverage ratio, on the basis of the reference point and the invalid region designated in step S302 (S304).

In a case where the coverage ratio calculated in step S304 achieves a predetermined coverage ratio (S306: Yes), the information processing device 10 ends the processing related to the output control of the support information.

On the other hand, in a case where the coverage ratio calculated in step S304 does not achieve the predetermined coverage ratio (S306: No), the coverage ratio calculation unit 145 calculates the recommended direction of sensing (S308).

Next, the output control unit 150 controls the output of the support information on the basis of the coverage region and the coverage ratio calculated in step S304, the recommended direction of sensing calculated in step S308, or the like (S310).

Note that the output control unit 150 may perform control so as to output a voice or the like, in addition to causing the display unit 155 to display the support information.

Next, the coverage ratio calculation unit 145 determines whether or not a new key frame is added (S312).

In a case where it is determined that the new key frame is not added (S312: No), the output control unit 150 continues the output control of the support information.

On the other hand, in a case of determining that the new key frame is added (S312: Yes), the coverage ratio calculation unit 145 returns to step S304 and recalculates the coverage region and the coverage ratio.

In the above, an example of the flow of the output control of the support information according to the present embodiment has been described.

Note that, in the above, the control in a case where the sensing by the user is assisted has been described as a main example. However, sensing according to the present embodiment may be performed by a device such as a robot. Furthermore, the support information according to the present embodiment may assist sensing performed by the device such as the robot.

In this case, the device such as the robot may perform, for example, an operation for performing sensing on the basis of the recommended direction given from the information processing device 10.

Furthermore, the support information according to the present embodiment may be two-dimensional display or three-dimensional display. Moreover, the output control unit 150 according to the present embodiment may perform control for AR displaying the support information, for example.

Furthermore, the processing using sensing information regarding an actual environment is not limited to the SLAM. Determination on comprehensive of the sensing information in the actual environment and output control related to guidance for improving the determination can be widely applied to a technology that requires comprehensive sensing in a predetermined space. As the technology described above, for example, generation of 360-degree panoramic photograph in all directions including up, down, left, and right directions or the like is exemplified.

The output control of the support information according to the present embodiment can be flexibly modified.

### <2. Hardware configuration example>

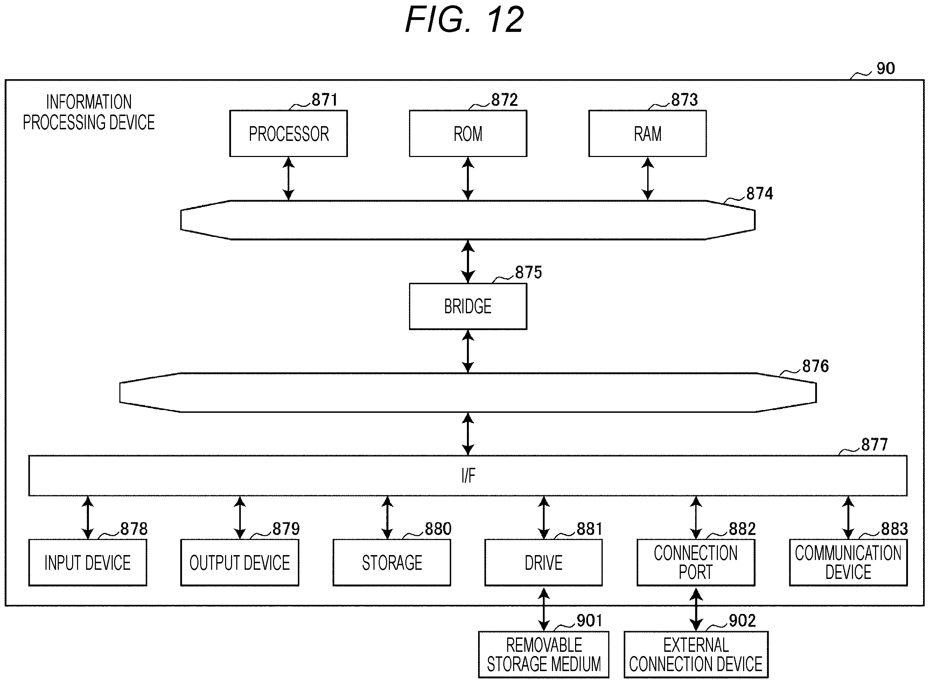

Next, a hardware configuration example of an information processing device 90 according to the embodiment of the present disclosure will be described. Fig. 12 is a block diagram illustrating a hardware configuration example of an information processing device 90 according to the embodiment of the present disclosure. The information processing device 90 may be a device having a hardware configuration equivalent to that of the information processing device 10.

As illustrated in Fig. 19, the information processing device 90 includes, for example, a processor 871, a read-only memory (ROM) 872, a random access memory (RAM) 873, a host bus 874, a bridge 875, an external bus 876, an interface 877, an input device 878, an output device 879, a storage 880, a drive 881, a connection port 882, and a communication device 883. Note that the hardware configuration illustrated here is an example, and some of the components may be omitted. Furthermore, components other than the components illustrated here may be further included.

### (Processor 871)

The processor 871 functions as, for example, an arithmetic processing device or a control device, and controls the overall operation of each component or a part thereof on the basis of various programs recorded in the ROM 872, the RAM 873, the storage 880, or a removable storage medium 901.

### (ROM 872, RAM 873)

The ROM 872 is means for storing a program to be read into the processor 871, data to be used for calculation, and the like. The RAM 873 temporarily or permanently stores, for example, the program to be read into the processor 871, various parameters that appropriately change when the program is executed, and the like.

### (Host bus 874, Bridge 875, External bus 876, and Interface 877)

The processor 871, the ROM 872, and the RAM 873 are mutually connected via, for example, the host bus 874 capable of performing high-speed data transmission. Meanwhile, the host bus 874 is connected to the external bus 876 having a relatively low data transmission speed via the bridge 875, for example. Furthermore, the external bus 876 is connected to various components via the interface 877.

### (Input device 878)

As the input device 878, for example, a mouse, a keyboard, a touch panel, a button, a switch, a lever, or the like is used. Moreover, as the input device 878, a remote controller (hereinafter referred to as a remote controller) capable of transmitting a control signal using infrared rays or other radio waves may be used. Furthermore, the input device 878 includes a voice input device such as a microphone.

### (Output device 879)

The output device 879 is, for example, a device capable of visually or auditorily notifying the user of acquired information, such as a display device such as a cathode ray tube (CRT), a liquid crystal display (LCD), or an organic electroluminescence (EL), an audio output device such as a speaker or a headphone, a printer, a mobile phone, a facsimile, or the like. Furthermore, the output device 879 according to the present disclosure includes various vibration devices capable of outputting a haptic stimulus.

### (Storage 880)

The storage 880 is a device for storing various types of data. As the storage 880, for example, a magnetic storage device such as a hard disk drive (HDD), a semiconductor storage device, an optical storage device, a magneto-optical storage device, or the like is used.

### (Drive 881)

The drive 881 is, for example, a device that reads information recorded in the removable storage medium 901 such as a magnetic disk, an optical disk, a magneto-optical disk, or a semiconductor memory or writes information into the removable storage medium 901.

### (Removable storage medium 901)

The removable storage medium 901 is, for example, a digital versatile disc (DVD) medium, a Blu-ray (registered trademark) medium, an HD DVD medium, various semiconductor storage media, or the like. It is needless to say that the removable storage medium 901 may be, for example, an integrated circuit (IC) card on which a noncontact IC chip is mounted, an electronic device, or the like.

### (Connection port 882)

The connection port 882 is a port for connecting an external connection device 902 such as a universal serial bus (USB) port, an IEEE 1394 port, a small computer system interface (SCSI), an RS-232C port, or an optical audio terminal, for example.

### (External connection device 902)

The external connection device 902 is, for example, a printer, a portable music player, a digital camera, a digital video camera, an IC recorder, or the like.

### (Communication device 883)

The communication device 883 is a communication device for connecting to a network, and is, for example, a wired or wireless local area network (LAN), Bluetooth (registered trademark), a communication card for wireless USB (WUSB), a router for optical communication, a router for asymmetric digital subscriber line (ADSL), a modem for various types of communication, or the like.

### <3. Conclusion>

As described above, one of the features of the program according to the present embodiment is to cause the computer to implement the output control function for controlling the output of the support information for assisting comprehensive sensing in the predetermined space and to cause the output control function to perform the output control of the support information, on the basis of the positional relationship between the feature point detected from the acquired sensing information and the set reference point.

According to the configuration described above, it is possible to more effectively and more efficiently assist the comprehensive sensing in the predetermined space.

Although the preferred embodiments of the present disclosure are described above in detail with reference to the accompanying drawings, the technical scope of the present disclosure is not limited to such examples. It is clear that one of ordinary skill in the technical field of the present disclosure may conceive of various modifications or corrections within the scope of the technical idea recited in claims, and it is understood that they also naturally belong to the technical scope of the present disclosure.

Furthermore, each step related to the processing described in the present disclosure is not necessarily processed in time series in the order described in the flowchart or the sequence diagram. For example, individual steps related to the processes of individual devices may be processed in an order different from the described order, or may be processed in parallel.

Furthermore, a series of processing performed by each device described in the present disclosure may be implemented by a program stored in a non-transitory computer readable storage medium. For example, each program is read into the RAM when the computer executes the program, and is executed by a processor such as a CPU. The storage medium is, for example, a magnetic disk, an optical disc, a magneto-optical disk, a flash memory, or the like. Furthermore, the program may be distributed via, for example, a network without using a storage medium.

Furthermore, the effects described herein are merely exemplary or illustrative, and not restrictive. That is, the technology according to the present disclosure can produce other effects that are apparent to those skilled in the art from the description of the present description, in combination with or instead of the effects described above.

Note that the following configurations also fall within the technological scope of the present disclosure.
(1) A program for causing a computer to function as
   an information processing device including
   an output control unit that controls output of support information for assisting comprehensive sensing in a predetermined space, in which
   the output control unit performs output control of the support information, on a basis of a positional relationship between a feature point detected from acquired sensing information and a set reference point.
(2) The program according to (1), in which
   the output control unit controls the output of the support information, on a basis of a coverage ratio regarding the acquired sensing information, calculated on a basis of the positional relationship between the feature point and the reference point.
(3) The program according to (2), in which
   the coverage ratio is calculated on a basis of an intersection between a spherical surface of a sphere centered on the reference point or a circumference of a circle centered on the reference point and a straight line connecting the feature point and the reference point.
(4) The program according to (3), in which
   the coverage ratio is calculated by obtaining a coverage region on the spherical surface or the circumference, formed by a plurality of the intersections related to a plurality of the feature points, for each sensor position and each sensor posture when the acquired sensing information is acquired.
(5) The program according to (4), in which
   the output control unit controls the output of the support information, on a basis of the coverage region.
(6) The program according to (5), in which
   the support information includes information regarding a recommended direction of sensing to be newly performed, and
   the recommended direction is calculated on a basis of the coverage region.
(7) The program according to (6), in which
   the recommended direction is calculated on a basis of a gravity of a non-coverage region on the spherical surface or the circumference.
(8) The program according to any one of (2) to (7), in which
   the coverage ratio is recalculated on a basis of the newly acquired feature point.
(9) The program according to any one of (2) to (8), in which
   the coverage ratio is recalculated on a basis of position change of the reference point.
(10) The program according to any one of (2) to (9), in which
   the coverage ratio is calculated on a basis of a designated invalid region.
(11) The program according to any one of (2) to (10), in which
   the support information includes the coverage ratio.
(12) The program according to any one of (4) to (7), in which
   the support information includes information regarding the feature point and a sensor position and a sensor posture when the acquired sensing information is acquired.
(13) The program according to any one of (2) to (12), in which
   the information processing device further includes
   a coverage ratio calculation unit that calculates the coverage ratio.
(14) The program according to any one of (1) to (13), in which
   the sensing information includes image information.
(15) The program according to any one of (1) to (14), in which
   the sensing information is used for SLAM.
(16) The program according to any one of (1) to (15), in which
   the information processing device further includes
   a sensor unit that acquires the sensing information.
(17) The program according to any one of (1) to (16), in which
   the information processing device further includes
   a display unit that displays the support information according to control by the output control unit.
(18) The program according to any one of (1) to (17), in which
   the information processing device includes a mobile device.
(19) An information processing device including:
   an output control unit configured to control output of support information for assisting comprehensive sensing in a predetermined space, in which
   the output control unit performs output control of the support information, on a basis of a positional relationship between a feature point detected from acquired sensing information and a set reference point.
(20) An information processing method including:
   by a processor
   controlling output of support information for assisting comprehensive sensing in a predetermined space, in which
   controlling the output of the support information further includes performing output control of the support information, on a basis of a positional relationship between a feature point detected from acquired sensing information and a set reference point.

### REFERENCE SIGNS LIST

- 10: Information processing device
- 110: Imaging unit
- 115: Feature point detection unit
- 120: Matching unit
- 125: Distance estimation unit
- 130: Pose difference estimation unit
- 135: Pose difference stacking unit
- 140: Key frame search unit
- 145: Coverage ratio calculation unit
- 150: Output control unit
- 155: Display unit
- 160: Map DB

## Claims

1. A program for causing a computer to function as
an information processing device including
an output control unit that controls output of support information for assisting comprehensive sensing in a predetermined space, wherein
the output control unit performs output control of the support information, on a basis of a positional relationship between a feature point detected from acquired sensing information and a set reference point.

2. The program according to claim 1, wherein
the output control unit controls the output of the support information, on a basis of a coverage ratio regarding the acquired sensing information, calculated on a basis of the positional relationship between the feature point and the reference point.

3. The program according to claim 2, wherein
the coverage ratio is calculated on a basis of an intersection between a spherical surface of a sphere centered on the reference point or a circumference of a circle centered on the reference point and a straight line connecting the feature point and the reference point.

4. The program according to claim 3, wherein
the coverage ratio is calculated by obtaining a coverage region on the spherical surface or the circumference, formed by a plurality of the intersections related to a plurality of the feature points, for each sensor position and each sensor posture when the acquired sensing information is acquired.

5. The program according to claim 4, wherein
the output control unit controls the output of the support information, on a basis of the coverage region.

6. The program according to claim 5, wherein
the support information includes information regarding a recommended direction of sensing to be newly performed, and
the recommended direction is calculated on a basis of the coverage region.

7. The program according to claim 6, wherein
the recommended direction is calculated on a basis of a gravity of a non-coverage region on the spherical surface or the circumference.

8. The program according to claim 2, wherein
the coverage ratio is recalculated on a basis of the newly acquired feature point.

9. The program according to claim 2, wherein
the coverage ratio is recalculated on a basis of position change of the reference point.

10. The program according to claim 2, wherein
the coverage ratio is calculated on a basis of a designated invalid region.

11. The program according to claim 2, wherein
the support information includes the coverage ratio.

12. The program according to claim 4, wherein
the support information includes information regarding the feature point and a sensor position and a sensor posture when the acquired sensing information is acquired.

13. The program according to claim 2, wherein
the information processing device further includes
a coverage ratio calculation unit that calculates the coverage ratio.

14. The program according to claim 1, wherein
the sensing information includes image information.

15. The program according to claim 1, wherein
the sensing information is used for SLAM.

16. The program according to claim 1, wherein
the information processing device further includes
a sensor unit that acquires the sensing information.

17. The program according to claim 1, wherein
the information processing device further includes
a display unit that displays the support information according to control by the output control unit.

18. The program according to claim 1, wherein
the information processing device includes a mobile device.

19. An information processing device comprising:
an output control unit configured to control output of support information for assisting comprehensive sensing in a predetermined space, wherein
the output control unit performs output control of the support information, on a basis of a positional relationship between a feature point detected from acquired sensing information and a set reference point.

20. An information processing method comprising:
by a processor
controlling output of support information for assisting comprehensive sensing in a predetermined space, wherein
controlling the output of the support information further includes performing output control of the support information, on a basis of a positional relationship between a feature point detected from acquired sensing information and a set reference point.
